# FASCICULE DE BREVET EUROPEEN

(11) **EP 0 678 169 B1**
(45) Date de publication et mention de la délivrance du brevet: **07.01.1998**
(21) Numéro de dépôt: 95900810.3
(22) Date de dépôt: 08.11.1994
(51) Int. Cl.: F16D 13/58, F16D 13/71

(54) **MECANISME D'EMBRAYAGE, NOTAMMENT POUR VEHICULE AUTOMOBILE**
KUPPLUNGSANORDNUNG INSBESONDERE FÜR KRAFTFAHRZEUGE
CLUTCH MECHANISM, PARTICULARLY FOR A MOTOR VEHICLE

(30) Priorité: 09.11.1993 FR 9313340
(43) Date de publication de la demande: 25.10.1995
(73) Titulaire: VALEO, 75017 Paris (FR)
(72) Inventeur: SEVENNEC, Yvon, . (FR); VIOLA, Paolo, F-75007 Paris (FR)
(74) Mandataire: Gamonal, Didier
(86) Numéro de dépôt international: FR9401299
(87) Numéro de publication internationale: WO9513481

(56) Documents cités:
- FR-A- 1 554 782
- FR-A- 2 546 999
- FR-A- 2 547 001
- GB-A- 2 176 549

## Description

La présente invention concerne un mécanisme d'embrayage à diaphragme, notamment pour véhicule automobile.

L'invention concerne plus particulièrement un mécanisme d'embrayage du type comportant une première pièce de forme générale annulaire, appelée couvercle, propre à être rapportée sur le plateau de réaction de l'embrayage, une deuxième pièce de forme générale annulaire, appelée diaphragme, prenant appui sur le couvercle et qui comporte une partie périphérique formant rondelle Belleville et une partie centrale fragmentée en doigts radiaux par des fentes pour coopérer avec une butée de débrayage, des moyens d'assemblage traversant le diaphragme à la faveur d'orifices élargis, que présentent les fentes du diaphragme au voisinage de la périphérie interne de la rondelle Belleville du diaphragme, lesdits moyens d'assemblage portant un appui secondaire en regard d'un appui primaire porté par le couvercle pour assujettir de manière pivotante le diaphragme au couvercle, et au moins un plateau, appelé plateau de pression, qui est solidaire en rotation du couvercle tout en étant monté mobile axialement par rapport à celui-ci et sur lequel porte la partie périphérique du diaphragme à la faveur d'un bossage annulaire d'appui fragmenté en secteurs annulaires d'appui, que présente le plateau de pression à cet effet à sa périphérie externe.

Un tel mécanisme est décrit dans le document EP-A-0 535 702 ainsi que dans la demande FR 2 692 637 déposée le 19 juin 1992. Dans le document EP-A-0 535 702 les moyens d'assemblage comportent des pattes de retenue, relativement minces et plates, d'un seul tenant avec le couvercle, qui traversent axialement le diaphragme et forment à leur extrémité libre un coude de calage.

Ces moyens d'assemblage portent en outre au moins une pièce d'appui secondaire, sous forme d'une couronne-jonc offrant un appui secondaire au diaphragme, ladite couronne-jonc étant intercalée axialement entre le diaphragme et une couronne de support engagée sur les pattes de retenue et calée axialement dans un sens sur le coude de calage, que présentent les pattes de retenue à leur extrémité libre.

Dans le document FR-2 692 637 les moyens d'assemblage comportent des rivets traversant axialement lesdits orifices du diaphragme et portent également une pièce d'appui secondaire sous forme d'une couronne-jonc intercalée axialement entre le diaphragme et une couronne de support fixée aux rivets.

Bien entendu le couvercle du mécanisme offre un appui primaire en regard de l'appui secondaire en sorte que le diaphragme est monté de manière pivotante entre ses appuis primaire et secondaire implantés radialement en-dessous du bossage d'appui du plateau de pression.

La présente invention a pour objet de tirer un nouveau parti des pièces portées par les moyens d'assemblage.

Suivant l'invention, un mécanisme d'embrayage du type sus-indiqué est caractérisé en ce que l'un des éléments pièce d'appui secondaire - couronne de support est lié en rotation par coopération de formes auxdits moyens d'assemblage et est prolongé à sa périphérie externe à partir de son plan par des languettes d'entraînement solidaires dudit élément en étant enracinées dans le plan de celui-ci sans présence d'organe de fixation et traversant le bossage d'appui du plateau de pression à la faveur des fentes séparant ses secteurs d'appui, et en ce que lesdites languettes sont propres à être fixées à leur extrémité libre au plateau de pression, en sorte qu'elles assurent une liaison en rotation, avec mobilité axiale, du plateau de pression avec le couvercle.

Dans une forme de réalisation, les moyens d'assemblage portent seulement une pièce d'appui secondaire, en sorte que c'est celle-ci qui comporte les languettes d'entraînement selon l'invention.

Grâce à l'invention la couronne de support ou la pièce d'appui secondaire permet une liaison en rotation, avec mobilité axiale, du plateau de pression par rapport au couvercle. Par ces languettes d'entraînement, elle assure une action de rappel du plateau de pression.

On appréciera que les moyens d'assemblage sont conservés au bénéfice de la standardisation, contrairement aux solutions décrites dans le document GB-A-2 176 549 faisant appel à des moyens d'assemblage spécifiques avec un anneau d'un seul tenant avec des pattes d'assemblage et servant à la fixation de languettes montées par rivetage sur ledit anneau en étant décalées axialement par rapport à celui-ci.

Il en résulte que le couvercle est simplifié puisqu'il n'y a plus besoin de prévoir dans celui-ci des trous pour la fixation des languettes tangentielles assurant de manière usuelle la liaison en rotation du plateau de pression avec le couvercle.

Le rebord radial du couvercle est donc rigidifié.

En outre les languettes d'entraînement, selon l'invention, ayant une zone d'enracinement située en-dessous des bossages d'appui du plateau de pression, il en résulte que le couvercle est moins échancré au niveau de l'extrémité libre des languettes. En effet, usuellement, le couvercle a une forme d'assiette creuse, et il est nécessaire d'échancrer la jupe annulaire et le rebord annulaire de fixation de celui-ci pour permettre un logement des languettes tangentielles. Ce sont ces languettes qui déterminent la taille des échancrures du couvercle.

Grâce à l'invention, la taille des échancrures, notamment circonférentiellement, peut être réduite, en sorte que le couvercle est rigidifié au bénéfice d'une meilleure levée du plateau de pression lors du désengagement de l'embrayage.

Dans une forme de réalisation les languettes sont inclinées et sont fixées chacune à une protubérance, que présente le plateau de pression à sa périphérie externe.

Grâce à l'invention cette protubérance est de taille réduite par rapport aux pattes usuelles, que présente le plateau de pression pour fixation des languettes tangentielles.

Il en résulte que l'on réduit l'encombrement diamétral du plateau de pression et donc du mécanisme, les pattes de l'art antérieur traversant usuellement la jupe du couvercle.

Dans la présente invention les protubérances ne traversent pas forcément la jupe du couvercle et dans tous les cas des pièces du véhicule automobile peuvent venir au plus près du couvercle. Dans une seconde forme de réalisation les languettes peuvent s'étendre radialement en étant échancrées pour passage des secteurs annulaires d'appui du plateau de pression.

Dans tous les cas, on réduit le nombre de pièces par rapport à l'art antérieur puisque les languettes sont solidaires de la couronne de support ou de la pièce d'appui secondaire avantageusement traité thermiquement pour leur donner l'élasticité voulue.

En outre on diminue également le nombre d'organes de fixation nécessaire pour fixer les languettes.

De plus on diminue les risques d'erreur. En effet, dans l'art antérieur, il subsistait un risque d'erreur en ce qui concerne le choix des languettes, qui sont stockées séparément.

Grâce à l'invention ce risque d'erreur est éliminé puisque la couronne de support ou la pièce d'appui secondaire porte les languettes.

De plus le montage du mécanisme est grandement facilité puisque, grâce à l'invention, il est possible de former un sous-ensemble unitaire comportant le couvercle avec ses appuis primaire et secondaire et les languettes d'entraînement portées par l'un des éléments couronne de support - pièce d'appui secondaire.

Ce sous-ensemble peut être fabriqué dans une unité de fabrication et être assemblé en final avec le plateau de pression dans une autre unité de fabrication, une seule opération étant nécessaire pour fixer les languettes.

Lorsque les moyens d'assemblage consistent en des pattes axiales, il suffit de prévoir à la périphérie interne de la couronne de support ou de la pièce d'appui secondaire des ouvertures pour assurer un blocage en rotation de la couronne de support.

Lorsque les moyens d'assemblage comportent des rivets, le blocage en rotation de la couronne de support est assuré naturellement par les rivets.

Dans une forme de réalisation c'est la couronne de support qui porte les languettes d'entraînement.

Suivant une caractéristique la couronne de support est traitée, par exemple, elle subit une opération de trempe suivie d'un revenu pour lui conférer l'élasticité voulue pour ses languettes d'entraînement.

Bien entendu l'appui secondaire du diaphragme n'est pas forcément porté par une couronne-jonc, mais peut être formé à la faveur d'un jonc d'appui.

Dans tous les cas la couronne de support constitue un outil encaissant les efforts de pliage des pattes ou l'effort de sertissage de la tête des rivets en sorte que l'appui secondaire du diaphragme est ménagé.

On obtient donc, de manière simple et économique, un mécanisme avec d'excellentes caractéristiques de fonctionnement, un couvercle simplifié, un plateau de pression aisément obtenu par moulage, et une couronne de support obtenue de manière simple par découpage à la presse.

En outre le mécanisme d'embrayage est mieux équilibré dynamiquement.

Bien entendu on peut inverser les structures en sorte que la pièce d'appui secondaire peut porter les languettes d'entraînement. En variante, de manière précitée, la couronne de support peut être omise et c'est alors la pièce d'appui secondaire qui porte les languettes d'entraînement.

Dans tous les cas, la pièce d'appui secondaire, ou la couronne de support, comporte une partie annulairement continue.

Après montage dans le mécanisme, les languettes sont inclinées axialement et rappellent le plateau de pression en direction du couvercle.

D'autres avantages apparaîtront à la lumière de la description qui va suivre des dessins annexés dans lesquels :
- la figure 1 est une vue en coupe axiale d'un module d'embrayage équipé d'une couronne de support selon l'invention;
- la figure 2 est une vue selon la flèche 2 de la figure 1 montrant la couronne de support avec son plateau de pression associé ;
- les figures 3 et 4 sont des vues analogues aux figures 1 et 2 pour un autre exemple de réalisation ;
- les figures 5 et 6 sont des vues analogues aux figures 1 et 2 pour encore un autre exemple de réalisation ;
- la figure 7 est une vue partielle agrandie de la figure 5.

Dans les figures est illustré un module d'embrayage pour véhicule automobile formant un ensemble unitaire et comportant successivement axialement un ensemble unitaire 1, dénommé mécanisme d'embrayage , une friction d'embrayage 2 et un plateau de réaction 10, dénommé également volant.

Le mécanisme d'embrayage 1, ici du type poussé, comporte un ensemble de pièces annulaires, à savoir un couvercle 4, un diaphragme 5 et un plateau de pression 3. Le couvercle et le diaphragme forment eux-mêmes un ensemble unitaire, le diaphragme étant monté de manière pivotante entre un appui primaire 41 porté par le couvercle 4 et un appui secondaire porté par des moyens d'assemblage 8 de manière décrite ci-après.

La friction d'embrayage 2 présente un disque de friction 21 portant à fixation sur chacune de ses faces une garniture de frottement 22 éventuellement fractionnée en plots de frottement.

Ce disque 21 est accouplé, ici par l'intermédiaire de ressorts 23 à action circonférentielle et de moyens de frottement à action axiale, à un moyeu 30 cannelé intérieurement. Pour ce faire le disque 21 est solidarisé à deux rondelles de guidage 25 disposées de part et d'autre d'un voile 27 solidaire du moyeu 30, ici par sertissage.

Plus précisément le disque 21 est accolé ici à l'une des rondelles de guidage 25 et est solidarisé à celles-ci par des entretoises 26 traversant à jeu circonférentiel le voile 27 pour solidariser entre elles les deux rondelles de guidage 25. Les ressorts 23, ici sous forme de ressorts à boudin, ou en variante de blocs en matière élastique, tels que des blocs en élastomère, sont montés dans les fenêtres pratiquées en vis-à-vis respectivement dans le voile 27 et les rondelles 25.

Lesdits moyens de frottement comportent un palier 24 interposé axialement entre l'une des rondelles 25 et le voile 30, ainsi qu'une rondelle d'application 28 et une rondelle élastique à action axiale 29, ici du type rondelle Belleville, interposée entre le voile 27 et l'autre rondelle 25.

La rondelle 29 prend appui sur la rondelle 25 concernée pour action sur la rondelle d'application 28, calée en rotation sur ladite rondelle 25 ici de manière connue en soi par des pions, et serrage du palier 24 entre le voile 27 et l'autre rondelle 25.

Le palier 24, ici en matière plastique, est doté de logements pour emmanchement des têtes de vis de fixation 12 du module d'embrayage au vilebrequin du moteur à combustion interne du véhicule, comme décrit dans le document FR 93 11325 déposé le 23 Septembre 1993.

Ces vis 12 sont adaptées par leur partie filetée à traverser le plateau de réaction 10 pour fixation du module d'embrayage au vilebrequin.

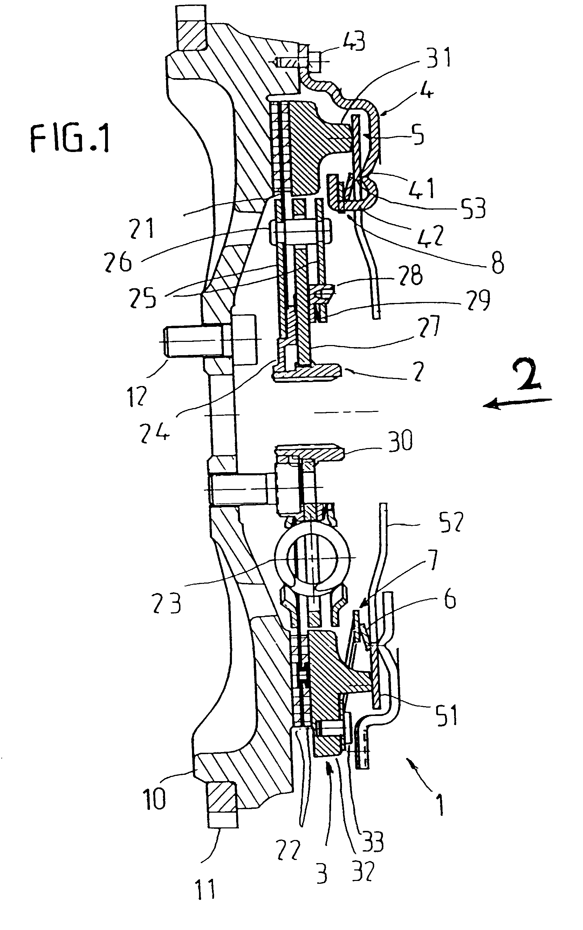

Ainsi à la figure 1 on voit dans la partie basse de celle-ci la position des vis avant montage du module sur le véhicule et dans la partie haute de cette figure la position des vis 12 après montage du module sur le véhicule.

Bien entendu le voile 27 présente des trous pour passage des outils de vissage des vis 12.

Ce module forme donc un ensemble unitaire équilibré dynamiquement que l'on vient fixer sur le vilebrequin.

Pour ce faire le couvercle 4 du mécanisme 1 est rapporté sur le plateau de réaction 10 portant la couronne de démarrage 11. La fixation a lieu ici par des vis 43 traversant des passages pratiqués dans un rebord radial de fixation, que présente le couvercle 4, ici en forme d'assiette creuse avec une jupe annulaire globalement d'orientation axiale raccordant ledit rebord radial à un fond, d'orientation transversale, troué centralement.

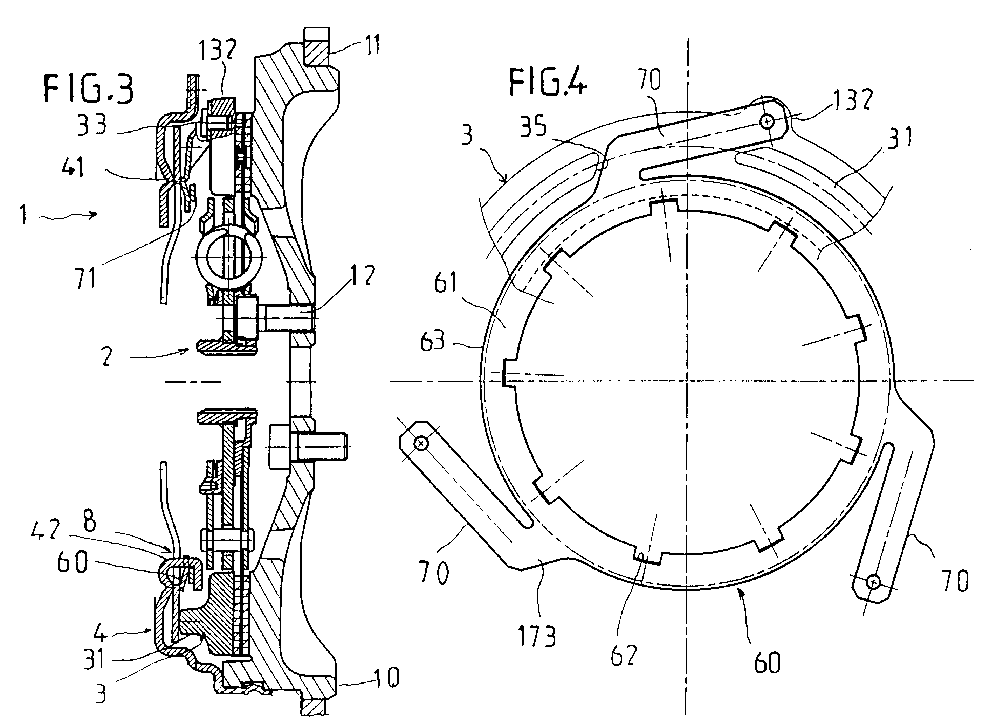

En variante la fixation du couvercle 4 et donc du mécanisme 1 sur le plateau 10 est réalisée à l'aide de rivets ou par sertissage (figure 3) ou autres.

Le diaphragme 5 est monté de manière pivotante sur le couvercle 4 à l'aide des moyens d'assemblage 8 précités assujettissant de manière pivotante le diaphragme au couvercle.

De manière connue en soi ce diaphragme 5, de forme annulaire, comporte une partie périphérique 51 formant rondelle Belleville et une partie centrale fragmentée en doigts radiaux 52 par des fentes, qui s'élargissent au niveau de la périphérie interne de la rondelle Belleville 51 pour former des orifices 53 élargis traversés axialement par les moyens d'assemblage 8.

Ces moyens d'assemblage 8 portent un appui secondaire en regard d'un appui primaire 41 porté par le couvercle 4. L'appui secondaire est porté par une pièce d'appui secondaire 6 décrite ci-après.

Le diaphragme 5 est monté ainsi de manière pivotante entre les appuis primaire et secondaire.

Ainsi qu'on le sait lorsque l'embrayage est engagé, le diaphragme 5 prend appui sur le couvercle 4, plus précisément sur l'appui primaire 41, pour solliciter le plateau de pression 3 en direction du plateau de réaction 10 et serrer les garnitures de frottement 22 entre les deux plateaux 3,10.

Le couple est donc transmis du moteur à l'arbre d'entrée de la boîte de vitesses via les garnitures de frottement 22 et le moyeu 30 cannelé intérieurement pour sa liaison en rotation avec ledit arbre d'entrée.

Pour désengager l'embrayage, il faut agir en poussant, à l'aide d'une butée de débrayage (non visible), sur l'extrémité interne des doigts 52 du diaphragme pour faire pivoter celui-ci et annuler la charge exercée par le diaphraghe sur le plateau de pression 3.

Les garnitures de frottement 22 sont ainsi désengagées. Pour ce faire le diaphragme 5, par la partie périphérique externe de sa rondelle Belleville 51, prend appui sur un bossage annulaire d'appui 31 fragmenté en secteurs annulaires d'appui, que présente le plateau de pression 3 à sa périphérie externe.

Par la partie périphérique interne de sa rondelle Belleville 51, le diaphragme 5 prend appui sur l'appui primaire 41 lorsque l'embrayage est engagé et sur l'appui secondaire 6 lorsque l'embrayage est admis à passer de sa position embrayage engagé à sa position embrayage désengagé.

Ici les moyens d'assemblage 8 comportent, comme dans le document EP-A-0 535 702, des pattes plates et minces 42 d'orientation axiale issues d'un seul tenant du couvercle 4 (de la périphérie interne du fond de celui-ci), lesdites pattes 42 traversant axialement le diaphragme 5 à la faveur des orifices 53 de celui-ci.

L'appui primaire 41 est formé à la faveur d'un embouti formé dans le fond du couvercle. En variante il peut s'agir d'un jonc porté par le couvercle 4.

L'appui secondaire est formé à la faveur d'une couronne-jonc 6 globalement de forme tronconique, dont la périphérie externe est arrondie pour former un appui secondaire en face de l'appui primaire 41. En variante la périphérie externe de la couronne 6 est à section en forme de V pour formation de l'appui secondaire.

Cette couronne 6 est engagée par sa périphérie interne à jeu radial sur les pattes 42 et constitue une pièce d'appui secondaire puisque c'est elle qui porte l'appui secondaire.

Une couronne de support 71 est également engagée sur les pattes 42, ladite couronne-jonc 6 étant interposée axialement entre le diaphragme 5 et la couronne de support 71 portée par les moyens d'assemblage 8, tout comme la couronne 6.

De manière connue en soi, pour réaliser l'assemblage, on replie radialement, en direction opposée à l'axe de l'ensemble, l'extrémité libre des pattes 42 pour former un coude de calage sur lequel prend appui axialement la couronne de support 71. Cette couronne est donc calée axialement dans un sens axial sur le coude et dans l'autre sens axial sur la couronne-jonc 6, le diaphragme 5 étant pincé élastiquement entre la couronne-jonc 6 et l'appui primaire 41 avec une charge bien déterminée et sans risque de coincement puisque la couronne de support 71 constitue en quelque sorte un outil encaissant l'effort de pliage de l'extrémité libre des pattes 42.

Pour effectuer l'engagement et le désengagement de l'embrayage de manière précitée, ainsi que l'entraînement en rotation du plateau de pression 3, il est donc nécessaire que le plateau de pression 3 soit lié en rotation au couvercle 4 avec mobilité axiale.

L'invention propose de tirer un nouveau parti de l'un des éléments couronne de support 71 - pièce d'appui secondaire 6.

Ainsi, suivant l'invention, un mécanisme du type sus-indiqué est caractérisé en ce que l'un des éléments couronne de support 71 - pièce d'appui secondaire 6 est lié en rotation par coopération de formes auxdits moyens d'assemblage 8 et est prolongé à sa périphérie externe à partir de son plan par des languettes d'entraînement 70 solidaires dudit élément en étant enracinées dans le plan dudit élément sans présence d'organe de fixation et traversant le bossage d'appui 31 du plateau de pression à la faveur des fentes 35 séparant deux à deux ses secteurs annulaires d'appui, et en ce que lesdites languettes sont propres à être fixées à leur extrémité libre au plateau de pression 3 en sorte qu'elles assurent une liaison en rotation, avec mobilité axiale, du plateau de pression 3 avec le couvercle 4.

Ces languettes 70 sont cambrées (figures 1,3,5), en sorte qu'elles assurent un rappel du plateau de pression 3 en direction du couvercle lors de la manoeuvre de désengagement de l'embrayage.

Dans la figure 1, les languettes 70 sont d'un seul tenant avec la couronne de support 71 et sont inclinées axialement et transversalement. Ces languettes s'étendent globalement tangentiellement par rapport à la périphérie externe de la couronne de support 71. Ces languettes 70 sont donc élastiquement déformables et permettent une action de rappel du plateau de pression 3 en direction du fond du couvercle 4.

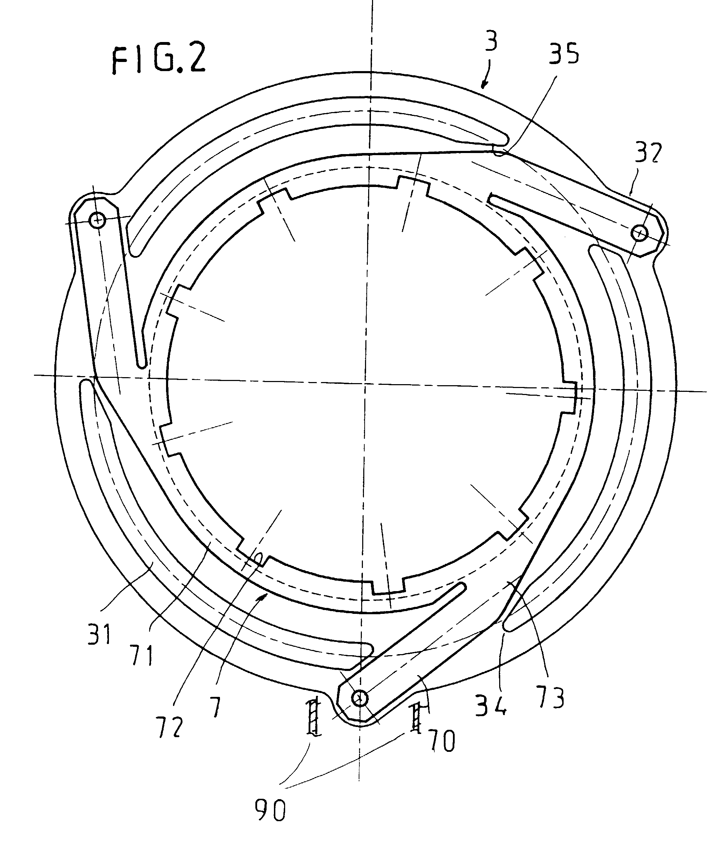

Les extrémités circonférentielles des secteurs annulaires d'appui 31 sont profilées et inclinées comme par exemple visible en 34 à la figure 2 pour permettre le passage des languettes 70. Comme visible dans cette figure 2, les extrémités circonférentielles des secteurs d'appui 31 sont effilées, chaque languette d'entraînement 70 se raccordant à la périphérie externe de la couronne de support 71 par une zone d'enracinement 73. Cette zone d'enracinement se rétrécit en allant vers le centre de la couronne 71.

La couronne 71 est dotée à sa périphérie interne d'encoches 72 engagées de manière complémentaire sur les pattes 42, d'orientation axiale, relativement minces et plates avant pliage de celles-ci.

On obtient ainsi de manière simple une liaison en rotation par coopération de formes entre les pattes 42 et la couronne 71. Cette liaison est ici du type tenons-mortaises. En variante, on peut prolonger la couronne 71 vers l'axe de l'ensemble pour former des passages fermés de section rectangulaire propres à être engagés sur les pattes 42 avant pliage de celles-ci.

Ici trois languettes 70 et trois secteurs 31 répartis régulièrement circonférentiellement sont prévus. Bien entendu ce nombre dépend des applications. Ici neuf encoches 72 sont prévues, leur nombre dépendant du nombre de pattes 42.

On notera que les zones d'enracinement 73 s'étendent en majeure partie entre deux encoches 72.

Le plateau de pression 3 en matière moulable, ici de la fonte, présente à sa périphérie externe en saillie radiale trois protubérances 32, qui épousent la forme de l'extrémité libre des languettes d'entraînement 70, trouées à leur extrémité libre, pour passage d'organes de fixation 33, ici des pions avec une tête prenant appui sur les languettes 70 et un fût engagé à force dans un passage prévu dans la protubérance 32, ici globalement semi-circulaire du plateau de pression 3.

Avantageusement, de manière connue en soi, les pions 33 sont moletés pour ce faire. Bien entendu la fixation des pions 33 peut être réalisée par collage ou autres et en variante ces pions 33 peuvent être remplacés par des rivets (figure 7), ou tout autre organe de fixation, tels que des boulons.

Avantageusement la couronne de support 71 est traitée thermiquement pour donner à ces languettes 70 l'élasticité. désirée.

On effectue ainsi de préférence une opération de trempe suivie d'un revenu.

Ainsi qu'on l'aura compris, la couronne 71, ici métallique, avec ses languettes 70 est obtenue aisément par une opération de découpe à la presse, et il est possible de former un sous-ensemble couvercle, couronne de support que l'on vient rapporter en final sur le plateau de pression 3 à l'aide des pions 33.

Ainsi qu'il ressort à l'évidence de la figure 2, les protubérances 32 ont une faible taille radiale, en sorte que cela favorise une réduction de l'encombrement radial du mécanisme d'embrayage 1. L'équilibrage dynamique du mécanisme est également facilité.

On notera également que les échancrures pratiquées dans le rebord radial du couvercle 4 et dans la jupe d'orientation axiale de celui-ci sont de dimension réduite, notamment circonférentiellement, par rapport à celle de l'art antérieur, lesdites échancrures étant adaptées à la taille des protubérances 32, en sorte que le couvercle est rigidifié.

Ainsi à la figure 2 on a représenté en 90 par deux traits les limites de ladite échancrure. Cette échancrure du rebord radial du couvercle est nécessaire pour permettre le passage l'outil de fixation des pions 33 au plateau de pression 3.

Bien entendu la présente invention n'est pas limitée à l'exemple de réalisation décrit, en particulier, les languettes 70 peuvent s'étendre radialement.

Par exemple à la figure 2, les languettes peuvent s'étendre radialement à la faveur d'une fente 35. Ces languettes ayant alors une forme triangulaire pour présenter une extrémité libre permettant la fixation au plateau de pression 3 par les pions 33. Ces languettes de par leur configuration triangulaire sont donc élastiquement déformables et de préférence comme dans les figures 1 et 2, on traite thermiquement la couronne de support 71 pour donner à ces languettes l'élasticité voulue.

Le plateau de pression 3 porte également à sa périphérie externe des protubérances pour fixation de l'extrémité libre, en forme de pointe, des languettes radiales. Ces protubérances épousent la forme de ladite extrémité libre trouée pour passage des pions 33 de fixation, ou de tout autre organe de fixation, tel que des rivets, boulons ou autres.

Bien entendu on peut augmenter le nombre des secteurs annulaires d'appui 31 et dans ce cas augmenter la largeur des languettes radiales, celles-ci présentant alors une échancrure centrale traversée par un secteur annulaire 31. Dans ce cas les languettes affectent deux fentes 35 consécutives.

Bien entendu les moyens d'assemblage peuvent consister, comme décrit dans le document FR 92 07514, en des rivets fixés au couvercle et permettant la fixation par sertissage de la couronne de support 71. Dans ce cas la couronne de support 71 est calée axialement dans les deux sens par les moyens d'assemblage 8, alors qu'à la figure 1 ladite couronne était seulement calée axialement dans un sens par lesdits moyens d'assemblage 8.

Dans ce cas, la couronne 71 est prolongée vers l'axe de l'ensemble pour formation de trous traversés par les rivets avant rivetage de la couronne de support 71.

Dans ce cas la couronne-jonc 6 est inclinée en sens inverse par rapport à celle de la figure 1. Cette couronne-jonc 6 s'appuyant à sa périphérie externe sur la couronne de support et à sa périphérie interne sur le diaphragme 5.

Tout autre moyen d'assemblage est envisageable, par exemple ces moyens d'assemblage peuvent consister en plusieurs secteurs annulaires, en forme de peigne, s'appuyant sur la face extérieure du fond du couvercle par leur partie annulaire de raccordement des pattes du peigne, lesdites pattes traversant les orifices 53 du diaphragme pour être repliées radialement vers l'extérieur au contact de la couronne de support 71.

La couronne-jonc 6 peut être remplacée par un jonc offrant l'appui secondaire et formant la pièce d'appui secondaire.

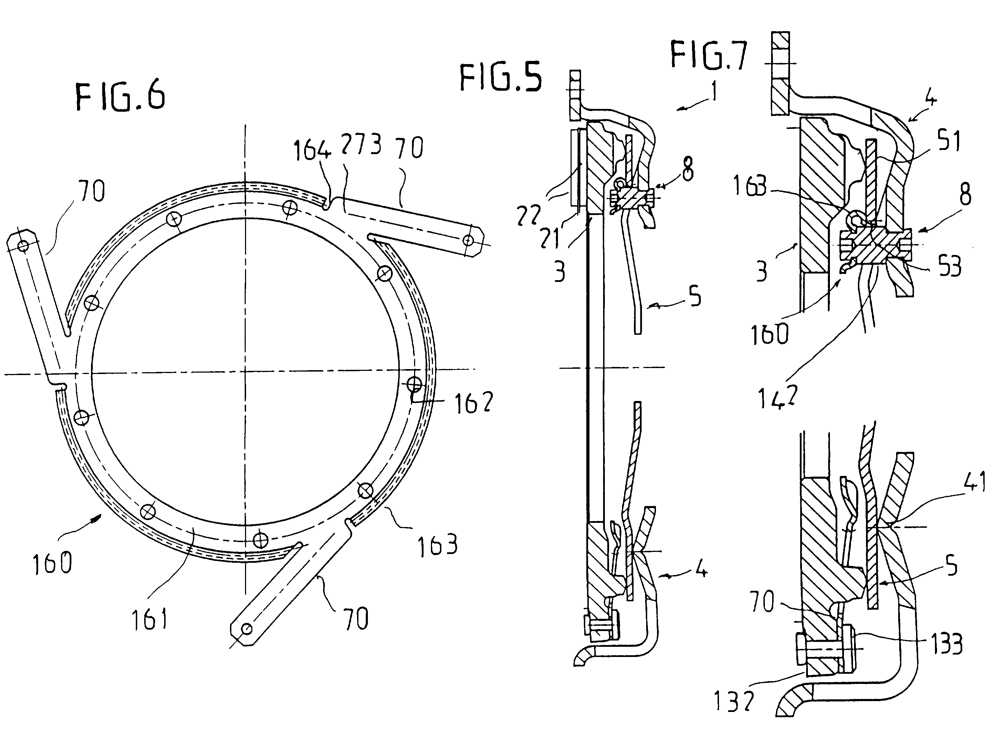

Bien entendu on peut inverser les structures comme illustré dans les figures 3 et 4, dans lesquelles les éléments communs aux figures 1 et 2 seront affectés des mêmes signes de référence.

Ainsi dans les figures 3 et 4 c'est la pièce d'appui secondaire 60 qui porte d'un seul tenant les languettes d'entraînement 70 inclinées axialement et transversalement. Ces languettes présentent chacune une extrémité libre pour passage des pions de fixation 33 engagés dans un trou borgne, que présentent des protubérances 132 du plateau de pression.

Ces protubérances radiales 132 sont modifiées par rapport à celles des figures 1 et 2 et sont ici en forme d'oreilles semi-circulaires s'étendant en saillie à la périphérie externe du plateau 3.

La couronne-jonc 60 présente une couronne 61 circulairement continue dotée intérieurement d'encoches 62 identiques aux encoches 72 de la figure 2 pour montage sur les pattes des moyens d'assemblage 8 et liaison en rotation avec celles-ci par coopération de formes.

A sa périphérie externe, cette couronne est arrondie en 63 pour formation de l'appui secondaire interrompue par les languettes 70. Les languettes 70 se raccordent à la couronne 61 par une zone d'enracinement 173 moins inclinée qu'à la figure 2.

Ces zones d'enracinement 73 sont montées à la faveur des fentes 35 séparant deux secteurs annulaires d'appui 31 du plateau de pression 3.

On notera que le couvercle 4 est rapporté sur le plateau de réaction 10 par sertissage, ledit couvercle étant prolongé à la périphérie externe de son rebord radial de fixation par un prolongement annulaire, d'orientation axiale, déformé pour être engagé dans une gorge, que comporte le plateau de réaction 10 ou volant.

En variante (figures 5 à 7) les moyens d'assemblage peuvent consister en des rivets 142 fixés au fond du couvercle 4 et permettant la fixation de la pièce d'appui secondaire 160.

Dans cette figure il n'est pas prévu de couronne de support et la pièce d'appui 160 est fixée par sertissage aux rivets 142 traversant le diaphragme 5 à la faveur des orifices 53.

La pièce d'appui 160 présente une couronne 161, trouée de place en place en 162, pour sa fixation par sertissage aux rivets 142. Cette couronne présente à sa périphérie externe un appui secondaire 163 de forme torique.

Cet appui est interrompu par les zones d'enracinement 273 des languettes 70 à la couronne 161. Comme visible à la figure 6, une fente 164 sépare l'appui secondaire 163 de la zone d'enracinement 273.

Les languettes 70 sont fixées par des rivets 133 aux protubérances 132, en forme de demi-lune, du plateau de pression 3.

En variante à la figure 3, on peut supprimer la couronne de support 71, en sorte que la couronne-jonc est montée sur les moyens d'assemblage 8 comme dans le document US-A-4,751,991. Cette couronne porte alors les languettes d'entraînement comme à la figure 3.

Bien entendu le mécanisme d'embrayage n'appartient pas forcément à un module et peut être rapporté sur un plateau de réaction fixé par avance sur le vilebrequin du moteur, par exemple par vissage.

De même la friction d'embrayage 2 peut être du type rigide, son disque 21 étant fixé directement sur le voile 27 qui peut être d'un seul tenant avec le moyeu 30.

L'embrayage peut comporter plusieurs plateaux de pression.

Le diaphragme 5, au lieu d'être monté à l'intérieur du couvercle 4, c'est-à-dire du côté de la face du couvercle tournée vers le plateau de pression 3, comme dans les figures 1 et 2, peut être monté à l'extérieur du couvercle, le plateau de pression par ses secteurs annulaires d'appui traversant alors le fond du couvercle.

Dans ce cas, le plateau de pression peut présenter des protubérances d'orientation axiale traversant le couvercle et permettant la fixation des languettes tangentielles.

Enfin les languettes d'entraînement 70 peuvent être en matière plastique renforcée ou non en étant surmoulées sur la couronne de support 71 ou sur la pièce d'appui secondaire 6,60.

Dans tous les cas, les languettes d'entraînement (70) sont solidaires de l'élément couronne de support 71 - pièce d'appui secondaire 6,60 concerné en étant enracinées dans le plan de celle-ci en sorte qu'aucun organe de fixation n'est présent et ne vient gêner le mouvement du plateau de pression 3.

## Revendications

1. Mécanisme d'embrayage, notamment pour véhicule automobile, comportant un couvercle (4), propre à être rapporté sur le plateau de réaction (10) d'un embrayage, un diaphragme (5) prenant appui sur le couvercle (4) et comportant une partie périphérique (51) formant rondelle Belleville et une partie centrale fragmentée en doigts radiaux (52) par des fentes pour coopérer avec une butée de débrayage, des moyens d'assemblage (8) portés par le couvercle (4) pour assujettir le diaphragme (5) au couvercle (4) et traversant le diaphragme (5) à la faveur d'orifices élargis (53), que présente le diaphragme (5) au voisinage de la périphérie interne de sa rondelle Belleville (51), et au moins un plateau de pression (3), qui est solidaire en rotation du couvercle (4), tout en étant monté mobile axialement par rapport à celui-ci, et sur lequel porte la partie périphérique (51) du diaphragme (5) à la faveur d'un bossage annulaire d'appui (31) fragmenté en secteurs d'appui, que présente le plateau de pression (3) à cet effet à sa périphérie externe, dans lequel lesdits moyens d'assemblage (8) portent, d'une part, une couronne de support (71) calée axialement au moins dans un sens sur lesdits moyens d'assemblage (8) et, d'autre part, une pièce d'appui secondaire (6,60,160) intercalée axialement entre ledit diaphragme (5) et ladite couronne de support (71), ledit couvercle (4) portant un appui primaire (41) en regard d'un appui secondaire porté par la pièce d'appui secondaire (6,60,160) avec interposition de manière pivotante du diaphragme (5) entre lesdits appuis, caractérisé en ce que l'un des éléments couronne de support (71) - pièce d'appui secondaire (6,60,160) est lié en rotation auxdits moyens d'assemblage (8) par coopération de formes et est prolongé à partir de son plan à sa périphérie externe par des languettes d'entraînement (70) solidaires dudit élément en étant enracinées dans le plan de celui-ci sans présence d'organe de fixation et traversant le bossage d'appui (31) du plateau de pression (3) à la faveur des fentes (35) séparant ces secteurs d'appui, et en ce que lesdites languettes (70) sont propres à être fixées à leur extrémité libre au plateau de pression (3), en sorte qu'elles assurent une liaison en rotation, avec mobilité axiale, du plateau de pression (3) avec le couvercle (4).

2. Mécanisme d'embrayage, notamment pour véhicule automobile, comportant un couvercle (4), propre à être rapporté sur le plateau de réaction (10) d'un embrayage, un diaphragme (5) prenant appui sur le couvercle (4) et comportant une partie périphérique (51) formant rondelle Belleville et une partie centrale fragmentée en doigts radiaux (52) par des fentes pour coopérer avec une butée de débrayage, des moyens d'assemblage (8) portés par le couvercle (4) pour assujettir le diaphragme (5) au couvercle (4) et traversant axialement le diaphragme (5) à la faveur d'orifices élargis (53), que présente le diaphragme (5) au voisinage de la périphérie interne de sa rondelle Belleville (51), et au moins un plateau de pression (3), qui est solidaire en rotation du couvercle (4), tout en étant monté mobile axialement par rapport à celui-ci, et sur lequel porte la partie périphérique (51) du diaphragme (5) à la faveur d'un bossage annulaire d'appui (31) fragmenté en secteurs d'appui, que présente le plateau de pression (3) à cet effet à sa périphérie externe, dans lequel lesdits moyens d'assemblage (8) portent une pièce d'appui secondaire (6,60,160) en forme de couronne calée axaielement au moins dans un sens sur lesdits moyens d'assemblage (8), ledit couvercle (4) portant un appui primaire (41) en regard d'un appui secondaire porté par la pièce d'appui secondaire avec interposition de manière pivotante du diaphragme (5) entre lesdits appuis, caractérisé en ce que la pièce d'appui secondaire (6,60,160) est liée en rotation par coopération de formes auxdits moyens d'assemblage (8) et est prolongée dans son plan à sa périphérie externe par des languettes d'entraînement (70) solidaires de ladite pièce d'appui secondaire en étant enracinées dans le plan de celle-ci sans présence d'organe de fixation et traversant le bossage d'appui (31) du plateau de pression (3) à la faveur des fentes (35) séparant ces secteurs d'appui, et en ce que lesdites languettes (70) sont propres à être fixées à leur extrémité libre au plateau de pression (3), en sorte qu'elles assurent une liaison en rotation, avec mobilité axiale, du plateau de pression (3) avec le couvercle (4).

3. Mécanisme selon la revendication 1 ou 2, caractérisé en ce que les languettes d'entraînement (70) sont inclinées axialement et transversalement et s'étendent globalement tangentiellement par rapport à l'élément couronne de support (71) - pièce d'appui secondaire (6,60), dont elles sont solidaires.

4. Mécanisme selon la revendication 3, caractérisé en ce que chaque languette d'entraînement (70) se raccorde à son élément couronne de support (71) - pièce d'appui secondaire (6,60) dont elle est solidaire par une zone d'enracinement (73,173) se rétrécissant en allant vers le centre dudit élément.

5. Mécanisme selon l'une quelconque des revendications 1 à 4, caractérisé en ce que les extrémités circonférentielles des secteurs annulaires d'appui (31) du plateau de pression (3) sont profilées et inclinées pour permettre le passage des languettes d'entraînement (70).

6. Mécanisme selon la revendication 1 ou 2, caractérisé en ce que les languettes d'entraînement s'étendent globalement radialement et ont une forme triangulaire.

7. Mécanisme selon l'une quelconque des revendications 1 à 6, caractérisé en ce que le plateau de pression (3) présente à sa périphérie externe des protubérances (32) qui épousent la forme de l'extrémité libre des languettes d'entraînement (70).

8. Mécanisme selon la revendication 7, caractérisé en ce que l'extrémité libre des languettes d'entraînement est trouée pour passage d'organes de fixation des languettes d'entraînement (70) au plateau de pression (3).

9. Mécanisme selon l'une quelconque des revendications 1 à 8, caractérisé en ce que l'un des éléments couronne de support (71) - pièce d'appui secondaire (6,60,160), dont sont solidaires les languettes, présente à sa périphérie interne des encoches (72) engagées de manière complémentaire sur des pattes (42), d'orientation axiale, relativement minces et plates, que présentent les moyens d'assemblage (8).

10. Mécanisme selon l'une quelconque des revendications 1 à 8, caractérisé en ce que l'un des éléments couronne de support (71) - pièce d'appui secondaire (6,60), dont sont solidaires les languettes tangentielles, présente des trous (162) pour passage de rivets (142) appartenant aux moyens d'assemblage (8).

11. Mécanisme selon l'une quelconque des revendications 1 à 10, caractérisé en ce que les languettes d'entraînement (70) sont d'un seul tenant avec la pièce d'appui secondaire (6,60,160) ou avec la couronne de support (71) concernée.

12. Mécanisme selon la revendication 11, caractérisé e ce que ladite pièce d'appui secondaire ou ladite couronne de support concernée sont traitées thermiquement pour donner auxdites languettes l'élasticité voulue.

13. Mécanisme selon l'une quelconque des revendications 1 à 10, caractérisé en ce que les languettes d'entraînement (70) sont surmoulées sur la couronne de support (71) ou la pièce d'appui secondaire (6,60,160) concernée.

## Patentansprüche

1. Kupplungsmechanismus, insbesondere für ein Kraftfahrzeug, mit einem an einer Gegendruckplatte (10) einer Kupplung anlegbaren Deckel (4), einer Tellerfeder (5), die auf dem Deckel (4) abgestüzt ist, und einen eine Bellevillefeder bildenden Umfangsteil (51) und einen zur Zusammenwirkung mit einem Kupplungsausrücklager durch Spalten in radialen Fingern (52) unterteilten Mittelteil enthält, Verbindungsmittel (8), die zur Anbringung der Tellerfeder (5) auf dem Deckel (4), vom Deckel (4) getragen sind und mittels erweiterter Öffnungen (53), die die Tellerfeder (5) in der Nähe des inneren Umfangs ihrer Bellevillefeder (51) aufweist, durch die Tellerfeder (5) durchgehen, und mindestens einer Druckplatte (3), die drehfest mit dem Deckel (4) verbunden ist, jedoch axial beweglich auf diesem montiert ist und auf der der Umfangsteil (51) der Tellerfeder (5) mittels einer ringförmigen, in Abstützungssektoren unterteilten Abstützungsvorsprung (31), den die Druckplatte (3) dazu an ihrem äußeren Umfang aufweist, aufliegt, wobei die Verbindungsmittel (8), einerseits, einen axial mindestens in einer Richtung auf den Verbindungsmitteln (8) verkeilte Trägerkranz (71) und, andererseits, ein axial zwischen der Tellerfeder (5) und dem Trägerkranz (71) zwischengelegtes sekundäres Abstützungselement (6, 60, 160) tragen, wobei der Deckel (4) eine primäre Auflage (41) trägt, die einer sekundären Auflage gegenüberliegt, welche die sekundäre Auflage - mit schwenkbarer Zwischenlage der Tellerfeder (5) zwischen diesen Auflagen - vom sekundären Abstützungselement (6, 60, 160) getragen ist,
dadurch gekennzeichnet, daß ein Element unter dem Trägerkranz (71) und dem sekundären Abstützungselement (6, 60, 160) formschlüssig drehfest mit den Verbindungsmitteln (8) verbunden ist und von seiner Oberfläche aus an seinem äußeren Umfang durch Mitnehmerzungen (70) verlängert ist, die in der Ebene dieses Elementes ohne Verbindungsorgan mit ihm fest verwurzelt sind, und mittels der diese Abstützungssektoren trennenden Spalten den Abstützungsvorsprung (31) der Druckplatte (3) durchgehen, und daß die Zungen (70) an ihrem freien Ende an der Druckplatte (3) so befestigbar sind, daß sie eine drehfeste Verbindung mit axialer Beweglichkeit der Druckplatte (3) mit dem Deckel (4) versichern.

2. Kupplungsmechanismus, insbesondere für ein Kraftfahrzeug, mit einem an einer Gegendruckplatte (10) einer Kupplung anlegbaren Deckel (4), einer Tellerfeder (5), die auf dem Deckel (4) abgesetzt ist und einen eine Bellevillefeder bildenden Umfangsteil (51) und einen zur Zusammenwirkung mit einem Kupplungsausrücklager durch Spalten in radialen Finger (52) unterteilten Mittelteil enthält, Verbindungsmittel (8), die zur Anbringung der Tellerfeder (5) auf dem Deckel (4) vom Deckel (4) getragen sind und mittels erweiterter Öffnungen (53), die die Tellerfeder (5) in der Nähe des inneren Umfangs ihrer Bellevillefeder aufweist, durch die Tellerfeder (5) axial durchgehen, und mindestens einer Druckplatte (3), die drehfest mit dem Deckel (4) verbunden ist, jedoch axial beweglich auf diesem montiert ist und auf der der Umfangsteil (51) der Tellerfeder (5) mittels einer ringförmigen, in Abstützungssektoren unterteilten Abstützungsvorsprung (31), den die Druckplatte (3) dazu an ihrem äußeren Umfang aufweist, aufliegt, wobei die Verbindungsmittel (8) ein kranzförmiges, sekundäres Abstützungselement (6, 60, 160) tragen, das mindestens in einer Richtung mit den Verbindungsmitteln (8) axial verkeilt ist, wobei der Deckel (4) eine gegenüber einer sekundären Auflage liegende, primäre Auflage (41) trägt, wobei die sekundäre Auflage - mit schwenkbarer Zwischenlage der Tellerfeder (5) zwischen diesen Auflagen - vom sekundären Abstützungselement (6, 60, 160) getragen ist,
dadurch gekennzeichnet, daß das sekundären Abstützungselement (6, 60, 160) formschlüssig drehfest mit den Verbindungsmitteln (8) verbunden ist und in seiner Oberfläche an seinem äußeren Umfang durch Mitnehmerzungen (70) verlängert ist, die in der Ebene des sekundären Abstützungselement (6, 60, 160) ohne Verbindungsorgan mit ihm fest verwurzelt sind, und mittels der die Abstützungssektoren trennenden Spalten (35) die Abstützungsvorsprünge (31) der Druckplatte (3) durchgehen und daß die Zungen (70) an deren freien Enden an der Druckplatte (3) so befestigbar sind, daß sie eine drehfeste, mit axialer Beweglichkeit versehenen, Verbindung der Druckplatte (3) mit dem Deckel (4) versichern.

3. Mechanismus nach Anspruch 1 oder 2,
dadurch gekennzeichnet, daß die Mitnehmerzungen (70) axial und quer geneigt sind, sich hauptsächlich tangential zum Element unter dem Trägerkranz (71) und dem sekundären Abstützungselement (6, 60, 160) erstrecken und mit diesem fest verbunden sind.

4. Mechanismus nach Anspruch 3,
dadurch gekennzeichnet, daß jede Mitnehmerzunge (70) mit seinem Element unter dem Trägerkranz (71) und dem sekundären Abstützungselement (6, 60, 160), mit dem sie fest verbunden ist, durch eine sich in Richtung des Zentrums dieses Elements verjüng.ende Verwurzelungszone (73, 173) angeschlossen ist.

5. Mechanismus nach einem der Ansprüche 1 bis 4,
dadurch gekennzeichnet, daß, um den Durchgang der Mitnehmerzungen (70) zu ermöglichen, die Umfangsenden der ringförmigen Abstützungssektoren (31) der Druckplatte (3) geneigt und profiliert sind.

6. Mechanismus nach Anspruch 1 oder 2,
dadurch gekennzeichnet, daß sich die Mitnehmerzungen (70) hauptsächlich radial erstrecken und eine dreieckige Form aufweisen

7. Mechanismus nach einem der Ansprüche 1 bis 6,
dadurch gekennzeichnet, daß die Druckplatte (3) an ihrem äußeren Umfang Vorsprünge (32) aufweist, die sich an die freien Enden der Mitnehmerzungen (70) anschmiegen.

8. Mechanismus nach Anspruch 7,
dadurch gekennzeichnet, daß das freie Ende der Mitnehmerzungen zum Durchgang von Befestigungsorganen der Mitnehmerzungen (70) in Richtung der Druckplatte (3) durchlocht ist.

9. Mechanismus nach einem der Ansprüche 1 bis 8,
dadurch gekennzeichnet, daß ein Element unter dem Trägerkranz (71) und dem sekundären Abstützungselement (6, 60, 160), mit denen die Zungen fest verbunden sind, an seinem inneren Umfang Nuten (72) aufweist, die auf axial ausgerichteten, relativ dünnen und flachen Lappen (42), welche die Verbindungsmittel (8) aufweisen, in komplementärer Weise eingreifen.

10. Mechanismus nach einem der Ansprüche 1 bis 8,
dadurch gekennzeichnet, daß ein Element unter dem Trägerkranz (71) und dem sekundären Abstützungselement (6, 60, 160), mit denen die tangentialen Zungen fest verbunden sind, Löcher (162) zum Durchgang von Nieten (142) aufweist, die Teile der Verbindungsmittel (8) sind.

11. Mechanismus nach einem der Ansprüchen 1 bis 10,
dadurch gekennzeichnet, daß die Mitnehmerzungen (70) mit dem betroffenen sekundären Abstützungselement (6, 60, 160) oder Trägerkranz (71) einteilig sind.

12. Mechanismus nach Anspruch 11,
dadurch gekennzeichnet, daß das betroffene sekundäre Abstützungselement (6, 60, 160) oder der betroffene Trägerkranz (71) thermisch verarbeitet sind, um den Zungen die gewünschte Elastizität zu geben.

13. Mechanismus nach einem der Ansprüche 1 bis 10,
dadurch gekennzeichnet, daß die Mitnehmerzungen (70) an den betroffenen Trägerkranz (71) oder das betroffene sekundäre Abstützungselement (6, 60, 160) im Gußstück angeformt sind.

## Claims

1. A Clutch mechanism, especially for a motor vehicle, comprising a cover plate (4), adapted to be attached on the reaction plate (10) of a clutch, a diaphragm (5) bearing on the cover plate (4) and comprising a peripheral portion (51) which defines a Belleville ring together with a central portion divided into radial fingers (52) by slots for co-operation with a clutch release bearing, assembly means (8) carried by the cover plate (4) for applying the diaphragm (5) to the cover plate (4) and extending through the diaphragm (5) via widened apertures (53) formed in the diaphragm (5) in the region of the inner periphery of its Belleville ring (51), and at least one pressure plate (3), which is secured to the cover plate (4) for rotation with it while being mounted for axial movement with respect to the latter, and on which the peripheral portion (51) of the diaphragm (5) bears by virtue of an annular projecting engagement element (31), which is divided into engagement sectors and which is disposed for this purpose at the outer periphery of the pressure plate (3), wherein the said assembly means (8) comprise, firstly, a support crown (71) which is located in at least one axial direction on the said assembly means (8), and secondly, a secondary abutment member (6, 60, 160) which is interposed axially between the said diaphragm (5) and the said support crown (71), the said cover plate (4) carrying a primary abutment (41) in facing relationship with a secondary abutment carried by the secondary abutment member (6, 60, 160), with the diaphragm (5) being pivotally interposed between the said abutments, characterised in that one of the elements consisting of the support crown (71) and the secondary abutment member (6, 60 160) is coupled in rotation to the said assembly means (8) by mating co-operation therewith, and is extended at its outer periphery, by drive tongues (70) which extend away from its plane and are fixed with respect to the said element, so that their roots are in the plane of the latter and so that no fastening member is present, and which extend through the projecting engagement element (31) of the pressure plate (3) via slots (35) separating the said engagement sectors, and in that the said tongues (70) are adapted to be secured at their outer end to the pressure plate (3), in such a way that they couple the pressure plate (3) to the cover plate (4), for rotation with it but with axial mobility thereon.

2. A Clutch mechanism, especially for a motor vehicle, comprising a cover plate (4), adapted to be attached on the reaction plate (10) of a clutch, a diaphragm (5) bearing on the cover plate (4) and comprising a peripheral portion (51) which defines a Belleville ring together with a central portion divided into radial fingers (52) by slots for co-operation with a clutch release bearing, assembly means (8) carried by the cover plate (4) for applying the diaphragm (5) to the cover plate (4) and extending through the diaphragm (5) via widened apertures (53) formed in the diaphragm (5) in the region of the inner periphery of its Belleville ring (51), and at least one pressure plate (3), which is secured to the cover plate (4) for rotation with it while being mounted for axial movement with respect to the latter, and on which the peripheral portion (51) of the diaphragm (5) bears by virtue of an annular projecting engagement element (31), which is divided into engagement sectors and which is disposed for this purpose at the outer periphery of the pressure plate (3), wherein the said assembly means (8) carry a secondary abutment member (6, 60, 160), the said cover plate (4) carrying a primary abutment (41) in facing relationship with a secondary abutment carried by the secondary abutment member, with the diaphragm (5) being interposed pivotally between the said abutments, characterised in that the secondary abutment member (6, 60, 160) is coupled in rotation to the said assembly means (8) by mating co-operation therewith, and is extended, in its plane and at its outer periphery, by drive tongues (70) which are fixed to the said secondary abutment member, so that their roots are in the plane of the latter and so that no fastening member is present, and which extend through the projecting engagement element (31) of the pressure plate (3) via slots (35) separating the said engagement sectors, and in that the said tongues (70) are adapted to be secured at their outer end to the pressure plate (3), in such a way that they couple the pressure plate (3) to the cover plate (4), for rotation with it but with axial mobility thereon.

3. A mechanism according to Claim 1 or Claim 2, characterised in that the drive tongues (70) are inclined axially and transversally and extend generally tangentially with respect to the element, consisting of the support crown (71) or secondary abutment member (6, 60), with respect to which they are fixed.

4. A mechanism according to Claim 3, characterised in that each drive tongue (70) is joined to its element consisting of the support crown (71) or secondary abutment member (6, 60), with respect to which it is fixed, through a root zone (73, 173) which reduces in width towards the centre of the support crown (71).

5. A mechanism according to any one of Claims 1 to 4, characterised in that the circumferential ends of the annular engagement sectors (31) of the pressure plate (3) are profiled and inclined, to enable the drive tongues (70) to pass.

6. A mechanism according to Claim 1 or Claim 2, characterised in that the drive tongues extend generally radially, and are triangular in shape.

7. A mechanism according to any one of Claims 1 to 6, characterised in that the pressure plate (3) has projecting elements (32) at its outer periphery, which match the shape of the free end of the drive tongues (70).

8. A mechanism according to Claim 7, characterised in that the free end of the drive tongues is perforated to accommodate members for fastening the drive tongues (70) to the pressure plate (3).

9. A mechanism according to any one of Claims 1 to 8, characterised in that one of the elements consisting of the support crown (71) and the secondary abutment member (6, 60, 160), with respect to which the tongues are fixed, has at its inner periphery notches (72) which are engaged, in a complementary manner, on lugs (42) which are orientated axially, being relatively thin and flat, and which are part of the assembly means (8).

10. A mechanism according to any one of Claims 1 to 8, characterised in that one of the elements consisting of the support crown (71) and the secondary abutment member (6, 60), with respect to which the tangential tongues are fixed, has holes (162) for accommodating rivets (142) of the assembly means (8).

11. A mechanism according to any one of Claims 1 to 10, characterised in that the drive tongues (70) are integral with the secondary abutment member (6, 60, 160) or support crown (71) as the case may be.

12. A mechanism according to Claim 11, characterised in that said secondary abutment member or support crown, as the case may be, are heat treated so as to give the desired elasticity for said drive tongues.

13. A mechanism according to any one of Claims 1 to 10, characterised in that the drive tongues (70) are moulded on to the support crown (71) or secondary abutment member (6, 60, 160), as the case may be.
